## Europäisches Patentamt
## European Patent Office
## Office européen des brevets

(19)

(11) Publication number: **0 001 512**
**B1**

(12)

# EUROPEAN PATENT SPECIFICATION

(45) Date of publication of patent specification: **21.10.81**

(51) Int. Cl.³: **H 01 C 7/04, G 01 N 27/16**

(21) Application number: **78300466.6**

(22) Date of filing: **05.10.78**

(54) Gas sensor.

(30) Priority: **05.10.77 US 839706**

(43) Date of publication of application:
**18.04.79 Bulletin 79/8**

(45) Publication of the grant of the European patent:
**21.10.81 Bulletin 81/42**

(84) Designated Contracting States:
**BE DE FR GB NL SE**

(56) References cited:
**FR - A - 2 172 441**
**FR - A - 2 280 057**
**US - A - 4 011 655**
**US - A - 4 001 756**

(73) Proprietor: **FORD MOTOR COMPANY LIMITED**
**Eagle Way**
**Brentwood Essex CM13 3BW (GB)**
(84) **GB**

(73) Proprietor: **FORD-WERKE AKTIENGESELLSCHAFT**
**Ottoplatz 2 Postfach 210369**
**D-5000 Köln 21 (DE)**
(84) **DE**

(73) Proprietor: **FORD FRANCE SOCIETE ANONYME**
**344 Avenue Napoleon Bonaparte B.P. 307**
**F-92506 Rueil Malmaison Cedex (FR)**
(84) **FR**

(73) Proprietor: **Ford Motor Company**
**Dearborn Wayne Michigan (US)**
(84) **BE NL SE**

(72) Inventor: **McDonald, William Roy**
**2371 Lake-in-the-Woods Blvd**
**Ypsilanti Michigan 48197 (US)**

(74) Representative: **Drakeford, Robert William et al,**
**15/448 Research & Engineering Centre**
**Laindon Basildon Essex SS15 6EE (GB)**

Courier Press, Leamington Spa, England.

# Gas sensor

This invention relates to gas sensors.

It has been determined that the operation of a conventional automotive internal combustion engine produces substantial quantities of deleterious gaseous combustion by-products. The principal pollutants so produced are hydrocarbons, carbon monoxide and various oxides of nitrogen. Extensive investigation into the combustion process, examination of the alternative combustion processes and detailed studies of exhaust gas treatment devices have led to the conclusion that the use of a catalytic converter within the exhaust system of an internal combustion engine provides a practical and effective technique for substantially reducing the emission of the deleterious gaseous combustion by-products into the atmosphere. A catalytic exhaust treatment device or converter which is capable of substantially simultaneously converting all three of the aforementioned principal pollutants into water, carbon dioxide, and gaseous nitrogen is referred to as a "three-way" catalyst. However, for the known three-way catalyst devices to be most effective, the gaseous by-products introduced into the converter must be the by-products of combustion of a substantially stoichiometric air/fuel mixture. Such three-way catalysts are said to have a very narrow "window" of air/fuel ratios at which the device is most efficiently operative on the three principal pollutants. By way of example, if $\lambda$ is the air/fuel ratio normalized to stoichiometry, the window may extend from about $0.99\lambda$ to about $1.01\lambda$. Such a three-way catalytic converter is described, for example, in United States Letters Patent 3,895,093. For air/fuel ratios of the combustion mixture on either side of the window, one or two of the principal pollutants will be converted in only very small percentages. Within the window, the three principal pollutants will be converted at very high percent efficiencies approaching 90% in some cases. In view of the narrowness of the catalytic converter window, it has been determined that the associated internal combustion engine should be operated with a combustible mixture having an air/fuel ratio as close as possible to stoichiometry.

The most satisfactory technique for assuring continuous or substantially continuous operation at the desired air/fuel ratio is through the utilization of an appropriate feedback control mechanism. In implementing suitable feedback control systems, it has been proposed to employ sensors responsive to the chemistry of the exhaust gases, that is, the hot gaseous by-products of combustion, in order to control the precise air content and/or fuel content of the air/fuel mixture being provided to the engine.

One type of electrochemical exhaust gas sensor employs a ceramic material which demonstrates a predictable electrical resistance change when the partial pressure of the oxygen of its environment changes. An example of such a material is titania (titanium dioxide having a general formula $TiO_2$). Such sensors can be fabricated generally in accordance with the teachings of United States Letters Patent 3,886,785. Tests of such devices have shown that at elevated and substantially constant temperatures, the devices will demonstrate a virtual step change in resistance for rich-to-lean and lean-to-rich excursions of the air/fuel ratio of the combustion mixture producing the exhaust gas environment of the device.

A principal difficulty which has been encountered with such variable resistive devices resides in the fact that such devices often demonstrate a measurable resistance change which is also a function of change of the temperature of the ceramic material, for example, a change of about 500°F (260°C) produces a measurable resistance change on the order of magnitude of a sensed rich-to-lean or lean-to-rich air/fuel mixture change. Such a temperature variation can be encountered, depending of course to some extent on the location of placement of the sensor within an exhaust system, during acceleration of the associated engine from idle speed to highway speeds. Heretofore, exhaust gas sensors which employed a variable resistance sensor ceramic have usually required that the temperature of the material be relatively closely controlled for reliable use in a feedback system intended to provide an internal combustion engine with very precise air/fuel ratio control.

Temperature control of the associated sensor has required the addition of expensive electronic temperature sensing and heating control systems external to the exhaust conduit and the addition of a heater element situated internally of, or in close proximity to, the sensor element. In order to narrow the operational range of temperature of the sensor, the sensor has been operated at the higher end of the predictable range of exhaust gas temperatures thus requiring substantially continuous application of heat energy for most of the operating cycles of the associated engine. While such devices have continued to be of rugged construction, the addition of the heater and associated electronics devoted to temperature control have increased cost and have increased risk of failure. An additional problem which has been encountered is a ceramic fracture problem believed to be associated with thermal shock caused by the rapid heating of the ceramic material by the heater element. For less precise operation such devices have been required to be installed at a location in an exhaust gas environment where the temperature of the exhaust gases will not vary substantially for variation in the operating cycle of the associated engine.

French patent specification No: 2280057 discloses an exhaust gas detection circuit in which the need for temperature control is avoided, in that temperature-induced variations in the resistance of a sensor comprising a porous capsule of titania powder are compensated for by means of a similar sensor comprising titania powder contained in a gas-impervious capsule, the two sensors being incorporated in opposite arms of a Wheatstone's bridge.

According to the present invention, there is provided a gas sensor comprising a first sensor element composed of a ceramic material having an electrical resistance which varies in response to changes in the temperature of a gas stream, and the partial pressure of a gas to be detected in the gas stream, a second sensor element connected in series with the first sensor element and composed of a ceramic material having an electrical resistance which varies in response to changes in the temperature of the gas stream, and electrical connections for applying a voltage across the first and second elements and for detecting the voltage at the junction between the elements characterised in that the ceramic material of the second element has a density closer to the theoretical density of the ceramic material than the density of the first element whereby the electrical resistance of the second element varies substantially more slowly as a function of change in the partial pressure of the gas to be detected in the gas stream than that of the ceramic material of the first element.

Preferably the ceramic elements are composed of a metal oxide ceramic material the electrical resistance of which varies in response to partial oxygen pressure, eg titania. The ceramic sensor elements are connected electrically in series and are arranged to define a voltage divider network. When a reference voltage is applied across the voltage divider network, the voltage appearing at the junction between the ceramic sensor members may define the output voltage of the exhaust gas sensor construction. The voltage appearing at the junction of the sensor elements in the voltage divider network will be relatively temperature independent since temperature effects on the ceramic members will be electrically complementary. By comparing the output voltage to the voltage level at either end of the voltage divider network a useful output signal may be derived. By selectively referencing to define the output signal as either the voltage drop across the partial pressure of oxygen responsive member or the voltage drop across the thermistor sensor member, the resulting output signal can be rendered to be high in the region of $\lambda$ values less than 1.0 or to be high in the region of $\lambda$ values greater than 1.0.

An embodiment of the invention will now be described, by way of example only, with reference to the drawings, in which:—

Figure 1 illustrates an example of an electrical or electronic exhaust gas sensor responsive control system with which the present invention is of utility.

Figure 2 illustrates an exhaust gas sensor construction according to the present invention.

Figure 3 illustrates, in an exploded view, an exhaust gas sensor including the present invention and according to Figure 2.

Figure 4 illustrates the electrical series connection of the exhaust gas responsive ceramic sensor members according to the present invention.

Referring now to the drawing wherein like members designate like structure throughout the exhaust gas conduit 10 of, for example, an internal combustion engine, not otherwise illustrated, is shown. An exhaust gas sensor 12 is mounted in conduit 10 so as to place exhaust gas responsive elements or members of the sensor within the stream of exhaust gases flowing through conduit 10. Exhaust gas sensor 12 may be threadedly received by a suitable land or boss provided therefor on exhaust gas conduit 10. Alternatively, such a land or boss may be provided on the conventional exhaust manifold whereby exhaust gas sensor 12 may be placed in closer proximity to the combustion chambers of the engine. In this regard, the selected location for placement of the exhaust gas sensor 12 within the exhaust system of the engine will be a function of the anticipated normal operating temperature of the selected location, the ease of servicing the sensor 12 in the selected location, the effects, if any, of electrical interference on or by ancillary electrical or electronic devices and general convenience. However, the selected location preferably will be upstream from the contemplated catalytic exhaust gas treatment device, not shown, and at a location exposed to the exhaust gases from all combustion chambers of the engine. The exhaust gas sensor 12 is arranged to communicate electrically with an electrical control means 14 over sensor electrical leads 16, 18, 20. The electrical control means 14 is arranged to communicate electrically with, for example, an air/fuel ratio modulator means, not shown, by way of modulator means lead 22.

An air/fuel ratio modulator means may be, for example, in the case of an electrically or electronically controlled fuel delivery system, a variable resistor arranged to control the quantity of fuel delivered to an engine in respect of a given quantity of air or, in the case of a mechanically or electromechanically controlled fuel delivery system such as a carburetor, a variably positionable metering orifice arranged to control the quantity of fuel delivered to an engine in respect of a given quantity of air. The air/fuel ratio modulator means alternatively may be arranged to control a variably positionable air valve so that the quantity of air ingested by the engine in respect of a given quantity of fuel may be controllably modulated. It will be appreciated that other applications exist for use of sensor 12, such as, for example, a furnace fuel control.

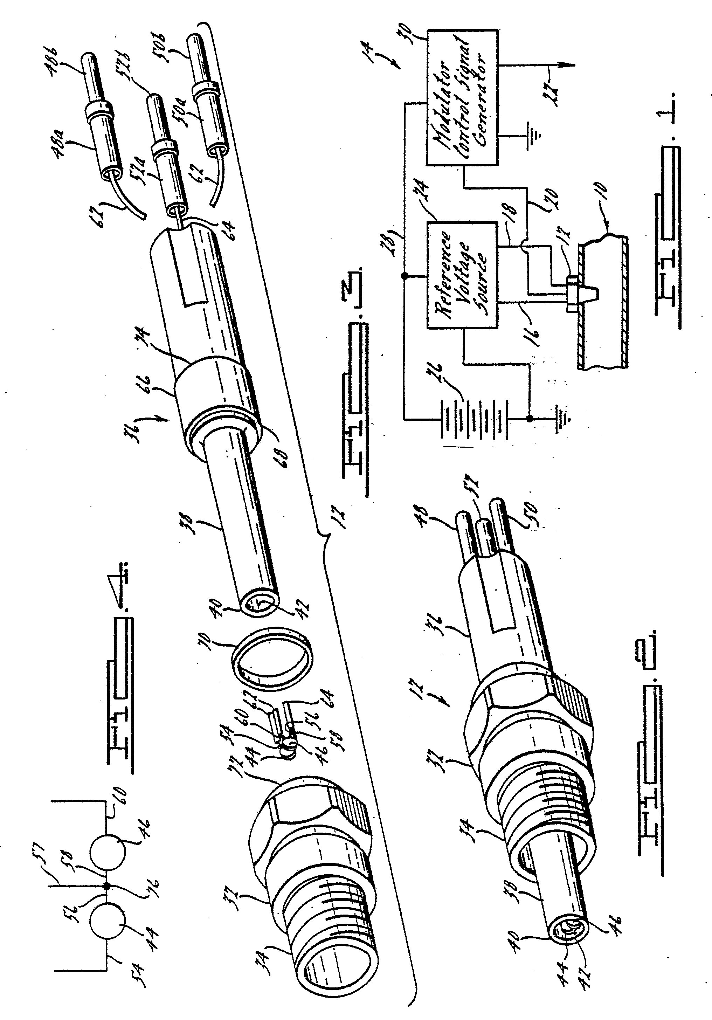

Referring specifically to Figure 1, a representative electrical control means 14 is illustrated in a block diagram. Reference voltage source 24 receives electrical energy, for example from the vehicle battery 26 and/or the conventional vehicle electrical charging system, not shown, via electrical bus 28. Reference voltage source 24 communicates with exhaust gas sensor 12 by way of sensor electrical leads 16, 18. Exhaust gas sensor 12 communicates via sensor electrical lead 20 with modulator control signal generator 30. Modulator control signal generator 30 also receives electrical energization from bus 28.

Modulator control signal generator 30 is adapted to generate an electrical signal on modulator means lead 22 as a function of the voltage signal appearing on sensor electrical lead 20. Modulator control signal generator 30 is preferably adapted to generate an output signal of a magnitude and electrical polarity which is suitably tailored to coact with an air/fuel ratio modulator means to increase or decrease the air/fuel ratio of the combustion mixture being provided to the associated engine in order to provide an exhaust gas composition flowing within conduit 10 which will be sensed by exhaust gas sensor 12 as being the gaseous by-products of combustion of a combustible mixture having a selected, for example, stoichiometric, air/fuel ratio. Modulator control signal generator 30 may operate to compare the signal received on sensor lead 20 from exhaust gas sensor 12 with a reference signal indicative of the exhaust gas sensor signal generated by an exhaust gas composition produced by combustion of an air/fuel mixture having the desired air/fuel ratio. Deviation of the signal on lead 20 from a value indicative of the desired ratio will cause a suitable, corrective, signal to be generated on modulator means lead 22 to initiate suitable correction of, for example, the fuel content of the combustible mixture. Modulator control signal generator 30 should be designed and tailored to take into account the time lag associated with the transport properties of the associated engine and the time period required for a change in air/fuel ratio to be recognised by exhaust gas sensor 12.

Referring now to Figures 2 and 3 and particularly to Figure 3, exhaust gas sensor 12 incorporating the present invention is illustrated and one possible method of assembly is described. Exhaust gas sensor 12 is provided with a housing means 32 which is threaded as at 34 for engagement with a suitably threaded aperture provided therefor within exhaust gas conduit 10. A ceramic insulator member 36 extends through housing means 32 and includes a forwardly projecting sensor support portion 38. Sensor support portion 38 includes forwardly projecting collar 40 which defines a well or cavity 42. The sensor 12 includes a pair of ceramic sensor elements or members 44, 46 received within well 42. Three electrical terminal members 48, 50, 52 extend rearwardly from ceramic insulator member 36. Electrical terminal members 48, 50, 52 are adapted for receipt of suitable mating connectors, not shown, to electrically communicate exhaust gas sensor 12 with the electrical control means 14.

The insert portions 48a, 50a, 52a of each of the electrical terminal members 48, 50, and 52 may be cemented into position within the rear portion of ceramic insulator member 36. The preferred cement is a catalytic agent, low temperature curable cement which cures to a high density. Such a cement is Sauereisen #31. The terminal members 48, 50 and 52 are arranged to project a contact portion 48b, 50b and 52b of each terminal member 48, 50 and 52 rearwardly from the rear face of ceramic insulator member 36.

The ceramic sensor elements 44, 46 comprise a partial pressure of oxygen responsive ceramic such as titania, for example sensor element 46, and a temperature compensating thermistor, for example sensor element 44. As used herein, "thermistor" refers to an electronic device the electrical resistance of which varies rapidly and predictably with the temperature of the device and which parameter or property varies only slightly, if at all, in short periods of time in response to changes in the partial pressure of oxygen of the environment of the device. In order to accomplish the objectives of the instant invention, the thermistor element, ceramic sensor element 44, is connected electrically in series with the partial pressure of oxygen responsive element 46 to change its electrical parameter or property in response to temperature variation. Furthermore, the series-connected sensor elements 44, 46 are arranged to be exposed to substantially the same exhaust gas environment and are arranged to define a voltage divider network wherein the usable output signal is derived from the circuit junction of the thermistor element with the partial pressure of oxygen responsive sensor element.

Each ceramic sensor element 44, 46 is provided with a pair of electrical leads 54, 56, 58 and 60. Leads 54 and 60 are provided with individual insulating sleeve members 62. The electrical leads 56, 58 are shown being provided with a further insulating sleeve 64. Insulating sleeves 62, 64 with their interiorly received electrical leads 54, 56, 58 and 60 are threaded through longitudinally extending bores or passages within, and which extend completely through ceramic insulator member 36 from the bottom of well or cavity 42 to the rear face of ceramic insulator 36. Electrical lead 54 and its associated insulating sleeve 62 are thus inserted into the insert portion 48a of electrical terminal member 48. The electrical lead 54 is electrically united with the contact portion 48b of terminal member 48. Similarly, electrical lead 60 and its associated insulator member 62 are inserted into the insert portion 50a of second electrical terminal 50. The electrical lead 60 is electrically united with the contact portion 50b of terminal member 50. The conductor formed by sensor leads 56, 58 and the associated insulator member 64 are similarly inserted into the insert portion 52a of electrical terminal 52 and the conductive portion thereof is electrically united with the contact portion 52b of terminal member 52.

The ceramic sensor elements 44, 46 are situated within the well or cavity 42. Projecting collar 40 may thus be operative upon insertion of the exhaust gas sensor assembly 12 into an exhaust system to shield the ceramic sensor elements 44, 46 from impact by any solid particles which may be dislodged from the interior surface of the exhaust gas conduit 10. Collar 40 also protects the electrical leads 54, 56, 58, 60 from flexure induced by pressure and exhaust gas flow fluctuations in the exhaust gas system. Collar 40 further protects the ceramic sensor elements 44, 46 and their electrical leads 54, 56, 58 and 60 from possible damage during assembly and from handling damage prior to or during installation in a vehicle exhaust system.

Ceramic insulator member 36 is provided with a centrally positioned enlarged annular portion 66 which is provided with a seal receiving recess 68 at its forward shoulder. Enlarged annular central portion 66 is provided with an abutment shoulder 74 at its rear. The forwardly projecting portion 38 of ceramic insulator member 36 is inserted through seal member 70 and seal member 70 is loosely received within recess 68. The ceramic insulator member 36 is then inserted into housing means 32. The rear portion 72 of housing means 32 is then crimped or otherwise deformed into close intimate contact with rear shoulder 74 of the central portion 66 of ceramic insulator means 36 to compressively and sealingly confine seal member 70 between recess 68 and a suitably provided shoulder within the central portion of housing means 32. Seal member 70 is operative to define a fluid tight barrier to flow around insulator member 36 through housing means 32. With specific reference to Figure 1, seal member 70 is operative to establish a fluid tight barrier between the interior of the exhaust gas conduit 10 and the exterior of exhaust gas conduit 10. Out co-pending European patent application No: 78300464.1 discloses and claims a sensor device similar to that shown in Figures 2 and 3.

Referring now to Figure 4, the electrical series connection between ceramic sensor elements 44 and 46 and electrical leads 54, 56, 58 and 60 is illustrated. Electrical leads 56, 58 are electrically united, as by welding, brazing or soldering, at junction 76. A single electrical lead 57 extends from junction 76. With reference to Figures 2 and 3, electrical lead 54 communicates, for example, with terminal member 48, electrical lead 60 communicates, for example with terminal 50 and electrical lead 57 may extend through insulating member 64 to communicate sensor leads 56, 58, for example, with electrical terminal 52. With reference to Figures 1 and 2, electrical terminals, 48, 50 of the exhaust gas sensor 12 may be electrically communicated to reference voltage source 24 by way of conductors 16, 18. Electrical terminal 52 may communicate the junction 76 of leads 56, 58 ceramic sensor elements 44, 46 to the modulator control signal generator 30 by way of electrical conductor 20.

Reference voltage source 24 may be arranged to generate a predetermined constant voltage differential between conductors 16, 18 of, for example, five (5.0) volts. This voltage differential will be applied by sensor leads 54, 60 to the voltage divider comprised of ceramic sensor elements 44, 46. As will be discussed hereinbelow, the ceramic sensor elements 44, 46 will behave as variable resistances in the presence of hot gases having varying oxygen partial pressure so that junction 76 will exhibit a voltage which will be indicative of the instantaneous oxygen partial pressure. By communicating the voltage at junction 76 to modulator control signal generator 30, a command signal may be generated for application by conductor 22 to an air/fuel ratio modulator means to maintain the combustible mixture provided to the associated engine at a preselected, for example stoichiometric, air/fuel ratio. By selectively determining which of leads 16, 18 is to be electrically more positive than the other of leads 16, 18, the voltage appearing at junction 76 will represent the voltage drop across either ceramic sensor element 44 or ceramic sensor element 46. Thus, the voltage appearing at junction 76 can be tailored to demonstrate either a low-to-high or a high-to-low variation for a selected change in the air/fuel ratio of the combustible mixture being provided to the associated engine.

One of the ceramic sensor elements, for example sensor element 44, is a high temperature thermistor. The other of the sensor elements, for example sensor element 46, is a variably resistive partial pressure of oxygen responsive ceramic, such as for example titania, which also demonstrates an electrical resistance variation in response to changes in its temperature. The thermistor sensor element 44 may be fabricated according to our co-pending European patent application Serial Number 78300462.5. The partial pressure of oxygen responsive sensor element 46 may be formed of titania material in the manner described in issued United States Letters Patent 3,886,785. The preferred form of partial pressure of oxygen responsive ceramic sensor element 46 to be used in fabricating exhaust gas sensor 12 is the improved form described in our copending European patent application Serial No. 78300463.3. Preferably, the thermistor member 44 and the partial pressure of oxygen responsive member 46 are fabricated from the same metal oxide ceramic forming base material. The advantage of this feature is discussed hereinbelow.

A suitable thermistor ceramic sensor element 44 may be formed, for example, from substantially pure titania powder. The thermistor chip member may be fabricated in much the same manner as is taught in the U.S. Patent 3,886,785 except that the titania powder is processed to achieve a ceramic material density approaching, as closely as possible, (preferably at least 97% of) the theoretical density of the material. Densification of the titania ceramic may be accomplished by several methods including high temperature sintering (sintering at temperatures in excess of about 2700°F) (1480°C) and/or use of a titania powder having a particle size range adjusted for maximum densification during sintering. Since we prefer to obtain substantially identical electrical response to temperature variation from the thermistor, element 44 and from the partial pressure of oxygen sensor, element 46, substantially the same titania powder material is used to form both ceramic sensor elements 44 and 46. Since uniformity of particle size consonant with obtaining a desired ceramic porosity is necessary to produce a satisfactory partial pressure of oxygen responsive sensor, element 46, high temperature sintering is relied upon to achieve the desired densification of the thermistor sensor, element 44. While tests have indicated that even densified titania will continue to demonstrate some resistance variation as a function of partial pressure of oxygen, it also has been determined that the time rate of response of resistance changes to changes in partial pressure of oxygen increases dramatically with increasing density of the titania material. Increases in response time on the order of 10,000 times have been observed. The time rate of response for densified titania increases sufficiently that, for all practical purposes in an internal combustion engine exhaust gas environment, the dependency of the thermistor resistance on partial pressure of oxygen and particularly changes in resistance induced by changes of partial pressure of oxygen can be ignored.

The preferred method of fabricating the partial pressure of oxygen responsive ceramic chip member involves the preparation of a substantially pure titania powder. As titania has two phases, the anatase phase and the rutile phase, and the rutile phase is the high temperature stable phase, the titania powder should be comprised of a substantial majority of rutile phase material. In order to convert anatase phase material to rutile phase material, the material may be calcined, for example for two hours at 2100°F (1150°C), and then ball milled to produce powder having small particle sizes with the substantial majority of the powder being rutile phase material. Calcining also improves the purity of the powder by volatilizing any volatilizable impurities. The powder should have 100% of the particles smaller in size than 20 microns and should have a substantial majority of the powder with a particle size smaller than about 10 microns. The processed powders may thereafter be ball milled with an organic binder solution to form a slurry.

The slurry may be formed onto a tape or sheet of material after which the slurry may be air dried and cast to form a sheet or tape of material. Suitably sized and shaped sensor element wafers of the air dried material may then be cut from the tape for further processing. A pair of lead wires may be inserted into the sensor elements and the sensor elements may thereafter be sintered to a pyrometric cone equivalent number 9. After the sensor elements have been matured, the matured ceramic elements may be impregnated with a combustion catalyst material such as platinum or an alloy thereof.

Impregnation may be accomplished by immersing the sensor elements in a 1:1 solution of 2% chloroplatinic acid and formaldehyde and by evacuating the container to remove entrapped air. The solution is allowed to flow through the porous sensor element so that substantially all surfaces of the grains of the sensor ceramic are exposed to the solution. The impregnated elements are then air dried and heated in air to a temperature of approximately 1300°F (700°C) for a period of approximately four (4) hours to assure the reduction of deposited chloroplatinate salts to finely divided particles to the associated titania grains within the sensor ceramic.

The voltage generated at the electrical junction 76 between the two temperature-variable resistors in response to a constant voltage being applied across the series connected elements 44, 46 develops a relatively temperature independent output voltage signal. The output voltage may be given by the expression

$$V_o = V_i \frac{R_{REF}}{(R_{TOTAL})} \qquad (1)$$

where $V_o$ is the output voltage, $V_i$ is the applied or input voltage, $R_{REF}$ is the resistance of the circuit element across which the output voltage is being measured, for example element 44 or element 46, and $R_{TOTAL}$ is the series resistance of both elements 44, 46. If the ratio of the resistances of elements 44 and 46 can be constrained to approach a constant value, the output signal $V_o$ will be relatively unaffected by temperature changes.

The resistance of the ceramic elements 44, 46 as a function of temperature can be given by the expression

$$R_{44} = R_1 \, e^{\dfrac{\beta_1}{t - t_o}} \qquad (2)$$

for the resistance of element 44 and by the expression

$$R_{46} = R_2 \, e^{\dfrac{\beta_2}{t - t_o}} \qquad (3)$$

for the resistance of element 46. $R_1$ and $R_2$ correspond to measured resistances at an elevated temperature, $t_o$, for the elements 44 and 46 respectively while $\beta_1$ and $\beta_2$ are constants determined by the ceramic material of the elements 44 and 46 respectively. Thus, at any other elevated temperature, t where t is greater than $t_o$, the resistance of the element 44 or 46 can be readily determined. For values of $R_1$ and $R_2$ measured at the same temperature $t_o$ and exposed to the same elevated temperature $t_1$ the ratio of resistances can be given by the expression

$$\frac{R_{44}}{R_{46}} = \frac{R_1}{R_2} \, e^{\dfrac{\beta_1 - \beta_2}{t_1 - t_o}} \qquad (4)$$

It can be seen that as $\beta_1$ approaches $\beta_2$, the ratio

$$\frac{R_{44}}{R_{46}}$$

approaches the ratio

$$\frac{R_1}{R_2}$$

which is a constant. Thus, the output voltage $V_o$ becomes relatively independent of temperature when the $\beta$ material characteristics are selected to be as nearly identical as possible.

By providing a partial pressure oxygen responsive ceramic exhaust gas sensor material which demonstrates a secondary resistance variation in response to temperature variation of its environment with an electrically series connected thermistor which is exposed to substantially the same exhaust gas environment, the secondary effects of temperature induced resistance variation may be substantially reduced or eliminated. By impressing a constant reference voltage across the series connected exhaust gas responsive ceramic variable resistors, the junction between the partial pressure of oxygen responsive device and the thermistor will exhibit a voltage which is relatively temperature independent. That is, temperature induced resistance variation of the resistance of the partial pressure of oxygen responsive device will be substantially duplicated by temperature induced resistance variation of the resistance of the thermistor device so that the voltage drop across the respective elements will be substantially unaffected by temperature variations.

By connecting a high temperature thermistor electrically in series with the partial pressure of oxygen responsive ceramic element and using the electrical junction so established as a voltage divider for a constant applied voltage, the effects of temperature change on the output signal from the sensor can be substantially reduced or eliminated.

## Claims

1. A gas sensor comprising a first sensor element composed of a ceramic material having an electrical resistance which varies in response to changes in the temperature of a gas stream, and the partial pressure of a gas to be detected in the gas stream, a second sensor element connected in series with the first sensor element and composed of a ceramic material having an electrical resistance which varies in response to changes in the temperature of the gas stream, and electrical connections for applying a voltage across the first and second elements and for detecting the voltage at the junction between the elements characterised in that the ceramic material of the second element has a density closer to the theoretical density of the ceramic material than the density of the first element whereby the electrical resistance of the second element varies substantially more slowly as a function of change in the partial pressure of the gas to be detected in the gas stream than the ceramic material of the first element.

2. A gas sensor according to Claim 1 wherein said elements are composed of metal oxide ceramic material resistance of which varies with partial pressure of oxygen.

3. A gas sensor according to Claim 1 or Claim 2 wherein the said second element comprises a body of ceramic material having a density approaching the theoretical density of the ceramic material.

4. A gas sensor according to any one of claims 1 to 3 wherein the said first element comprises a porous body composed of grains of ceramic material and particles of a combustion catalyst dispersed throughout the porous body on the surface of the grains of the ceramic material.

5. A gas sensor according to any one of claims 1 to 4 wherein the first and second elements are composed of titania.

6. An exhaust gas sensing device for an engine exhaust system comprising a housing adapted to be mounted in the engine exhaust system and a gas sensor according to any one of Claims 1 to 5 supported in the housing for location in the exhaust gases passing through the exhaust system.

7. A device according to Claim 6 wherein a ceramic insulator having a forwardly-projecting sensor portion, and a rearwardly-extending terminal portion is mounted in the housing, the sensor portion defines an open cavity within which the sensor is received, said cavity having a depth sufficient to shield the sensor from the flow of gaseous combustion products in the exhaust system and passages in the ceramic insulator extend rearwardly from the cavity to the terminal position, and electrical leads from the sensor are received in respective ones of the passage.

8. Sensing apparatus for detecting changes in a physical property of a gas stream comprising a gas sensor or sensing device according to any one of claims 1 to 7 and means for detecting voltages across the first element and across the second element electrically connected to the elements and to the junction.

## Revendications

1. Détecteur de gaz comprenant un premier élément détecteur fait d'une matière céramique ayant une résistance électrique qui varie en fonction des variations de la température d'un flux gazeux et de la pression partielle d'un gaz à détecter dans le flux gazeux, un second élément détecteur connecté en série au premier élément détecteur et fait d'une matière céramique ayant une résistance électrique qui varie en fonction des variations de la température du flux gazeux, et des connexions électriques pour appliquer une tension au premier et au second élément et pour détecter la tension à la jonction entre les éléments, caractérisé en ce que la matière céramique du second élément a une masse volumique plus proche de la masse volumique théorique de la matière céramique que celle du premier élément, la résistance électrique du second élément variant sensiblement plus lentement en fonction d'une variation de la pression partielle du gaz à détecter dans le flux gazeux que celle de la matière céramique du premier élément.

2. Détecteur de gaz suivant la revendication 1, caractérisé en ce que les éléments sont faits d'une matière céramique comprenant un oxyde métallique dont la résistance varie avec la pression partielle de l'oxygène.

3. Détecteur de gaz suivant la revendication 1 ou 2, caractérisé en ce que le second élément comprend un corps un matière céramique ayant une masse volumique se rapprochant de la masse volumique théorique de la matière céramique.

4. Détecteur de gaz suivant l'une quelconque des revendications 1 à 3, caractérisé en ce que le premier élément comprend un corps poreux fait de grains de matière céramique et de particules d'un catalyseur de combustion dispersées dans le corps poreux sur la surface des grains de la matière céramique.

5. Détecteur de gaz suivant l'une quelconque des revendications 1 à 4, caractérisé en ce que le premier et le second élément sont faits de bioxyde de titane.

6. Détecteur de gaz d'échappement pour un système d'échappement de moteur, caractérisé en ce qu'il comprend un corps propre à être monté dans le système d'échappement du moteur et un détecteur de gaz suivant l'une quelconque des revendications 1 à 5 supporté dans le corps en vue d'être placé dans les gaz d'échappement passant dans le système d'échappement.

7. Dispositif suivant la revendication 6, caractérisé en ce qu'un isolateur en matière céramique comportant une partie détectrice qui fait saillie vers l'avant et une partie terminale qui s'étend vers l'arrière est monté dans le corps, la partie détectrice délimitant une cavité ouverte dans laquelle le détecteur est reçu, cette cavité ayant une profondeur suffisante pour protéger le détecteur du flux de produit de combustion gazeux dans le système d'échappement et des passages dans l'isolateur en matière céramique s'étendent vers l'arrière depuis la cavité jusqu'à l'endroit des bornes, et des conducteurs électriques partant du détecteur sont reçus dans des passages correspondants.

8. Appareil détecteur servant à détecter des variations d'une propriété physique d'un flux gazeux, caractérisé en ce qu'il comprend un détecteur de gaz ou un dispositif détecteur suivant l'une quelconque des revendications 1 à 7 et des moyens pour détecter des tensions dans le premier élément et dans le second élément qui sont connectés électriquement à ces éléments et à la jonction.

## Patentansprüche

1. Gasmessfühler, bestehend aus einem ersten Messfühlerelement aus einem keramischen Material mit einem elektrischen Widerstand, der in Abhängigkeit von Aenderungen der Temperatur des Gasstroms und des Partialdrucks des im Gasstrom zu erfassenden Gases variiert, aus einem zweiten, mit dem ersten in Reihe geschalteten Messfühlerelement aus einem keramischen Material mit einem elektrischen Widerstand, der in Abhängigkeit von Aenderungen der Temperatur des Gasstroms variiert, und aus elektrischen Anschlüssen zum Anlegen einer Spannung an das erste und zweite Element und zur Erfassung der Spannung am Verbindungspunkt der Elemente, dadurch gekennzeichnet, dass das keramische Material des zweiten Elements eine Dichte aufweist, die der theoretischen Dichte des keramischen Materials näher liegt als diejenige des ersten Elements, sodass der elektrische Widerstand des zweiten Elements in Abhängigkeit von Aenderungen des Partialdrucks des im Gasstrom zu erfassenden Gases erheblich langsamer variiert als der des ersten Elements.

2. Gasmessfühler nach Anspruch 1, dadurch gekennzeichnet, dass die besagten Elemente aus einem keramischen Metalloxydmaterial bestehen, dessen Widerstand mit dem Sauerstoffpartialdruck variiert.

3. Gasmessfühler nach Anspruch 1 oder 2, dadurch gekennzeichnet, dass das besagte zweite Element einen Körper aus keramischem Material darstellt, dessen Dichte der theoretischen Dichte des keramischen Materials nahekommt.

4. Gasmessfühler nach einem der Ansprüche 1 bis 3, dadurch gekennzeichnet, dass das besagte erste Element einen porösen Körper darstellt, der aus Körnern eines keramischen Materials und Teilchen eines durch den porösen Körper hindurch auf der Oberfläche der keramischen Materialkörner dispergierten Verbrennungskatalysators besteht.

5. Gasmessfühler nach einem der Ansprüche 1 bis 4, dadurch gekennzeichnet, dass das erste und zweite Element aus Titanoxyd bestehen.

6. Abgasmessfühlergerät für ein Motorabgassystem, dadurch gekennzeichnet, dass es aus einem im Motorabgassystem anbringbaren Gehäuse und einem Gasmessfühler nach einem der Ansprüche 1 bis 5 besteht, der im Gehäuse zur Anordnung in den durch das Abgassystem strömenden Abgasen angebracht ist.

7. Gerät nach Anspruch 6, dadurch gekennzeichnet, das ein keramischer Isolator mit einem nach vorne weisenden Messfühlerteil und einem nach hinten weisenden Endteil im Gehäuse angeordnet ist, der Messfühlerteil einen den Messfühler aufnehmenden offenen Hohlraum begrenzt, wobei dieser Hohlraum genügend tief ist, um den Messfühler von der Strömung der gasförmigen Verbrennungsprodukte im Abgassystem abzuschirmen, und Durchlässe sich im keramischen Isolator vom Hohlraum nach hinten zur Endlage erstrecken und vom Messfühler kommende elektrische Leitungen sich in den entsprechenden Durchlässen befinden.

8. Messfühlapparat zur Erfassung von Aenderungen einer physikalischen Eigenschaft des Gasstromns, dadurch gekennzeichnet, dass er aus einem Gassmessfühler oder Messfühlgerät nach einem der Ansprüche 1 bis 7 und Mitteln besteht, die der Erfassung von an das erste Element und das zweite Element anliegenden Spannungen dienen und elektrisch an die Elemente und den Verbindungspunkt angeschlossen sind.

FIG. 1.

FIG. 2.

FIG. 3.

FIG. 4.

FIG. 5.